# EUROPÄISCHE PATENTSCHRIFT

(11) **EP 3 060 350 B1**
(45) Veröffentlichungstag und Bekanntmachung des Hinweises auf die Patenterteilung: **29.04.2020**
(21) Anmeldenummer: 14786828.5
(22) Anmeldetag: 08.10.2014
(51) Int. Cl.: B04B 1/14, B04B 11/04, C12C 11/11

(54) **VERFAHREN ZUR KLÄRUNG EINES FLIESSFÄHIGEN PRODUKTES MIT EINER ZENTRIFUGE**
METHOD FOR CLARIFYING A FLOWABLE PRODUCT BY WAY OF A CENTRIFUGE
PROCÉDÉ DE CLARIFICATION D'UN PRODUIT FLUIDE AVEC UNE CENTRIFUGEUSE

(30) Priorität: 21.10.2013 DE 102013111579
(43) Veröffentlichungstag der Anmeldung: 31.08.2016
(73) Patentinhaber: GEA Mechanical Equipment GmbH, 59302 Oelde (DE)
(72) Erfinder: WAUBKE, Carsten, 59302 Oelde (DE)
(74) Vertreter: Specht, Peter
(86) Internationale Anmeldenummer: PCT/EP2014/071578
(87) Internationale Veröffentlichungsnummer: WO 2015/058957

(56) Entgegenhaltungen:
- EP-A2- 0 049 089
- DE-A1- 1 532 676
- DE-A1- 4 334 939

## Beschreibung

Die Erfindung betrifft ein Verfahren nach dem Oberbegriff des Anspruchs 1,

Nach der EP 1532676 wird eine Entleerungssteuerung in Abhängigkeit von dem Vibrationsverhalten einer Separatortrommel durchgeführt. Dazu ist vorgesehen, dass in dem Trommelinnenraum ein Unwuchtkörper platziert wird, um entsprechend große sensierbare Unwuchten zu erzeugen. Dies ist umständlich und führt zu einer erhöhten Unwucht, was nicht wünschenswert ist.

Nach der EP 0 049 089 A2 erfolgt zur Steuerung des Betriebes eines Separators an einer Separatortrommel eine Sensierung eines aus Feststoffaustrittsöffnungen austretenden Strahls und eine Bestimmung der Masse an Medium in diesem Strahl, was relativ aufwendig ist.

Nach der DE 43 34 939 A1 wird an einer Zentrifuge eine Schwingungsbetrachtung vorgenommen wird, um die Trommeldrehzahl zu regeln und um kritische Zustände zu verhindern.

Aus der DE 32 28 074 A1 ist ein Verfahren bekannt, das in vorteilhafter Weise eine Steuerung eines kontinuierlich entleerenden Klärseparators mit einer Trommel ermöglicht. Hierbei wird ein Produktparameter - hier der Trübungsgrad einer aus der Trommel ablaufenden Klarphase - ermittelt und dazu genutzt, um die Entleerung des Feststoffraumes der Trommel zu überwachen. Dabei wird die Feststoffphase kontinuierlich entleert. Wenn die Trübung in der Klarphase zu hoch wird, erfolgt eine Rückleitung der Klarphase in die Trommel.

Daneben ist es auch bekannt, einen Klärseparator zur Klärung von Flüssigkeiten, insbesondere Getränken, einzusetzen, bei dem die Feststoffe diskontinuierlich mit Hilfe eines Kolbenschiebers zum Öffnen und Verschließen von Austragsöffnungen entleert werden, wenn der mit der Fotozelle gemessene Trübungsgrad einen gewissen Grenzwert überschreitet.

Auch dieses Verfahren hat sich an sich bewährt. Dennoch besteht ein Bedarf an einfachen und dennoch möglichst präzisen Methoden, mit denen ein zur Entleerung von Feststoffen gut geeigneter Moment bei der Klärung von Produkten von Feststoffen mit diskontinuierlich selbstentleerenden Separatoren bestimmt wird.

Dies gilt insbesondere in Hinsicht auf die Verarbeitung von vorgeklärten Bieren, denen zum Würzen Hopfen zugesetzt wurde. Der Hopfengehalt im Ablauf ist bei einer Trübungsmessung nur schwer bestimmbar, da der Hopfen in Form von Feststoffteilchen im Bier verteilt ist, was aber nicht zu einer messbaren gleichmäßigen Trübung führt.

Die Erfindung hat die Aufgabe, dieses Problem zu lösen.

Die Erfindung löst diese Aufgabe durch ein Verfahren mit den Merkmalen des Anspruchs 1. Der Grenzwert kann ein direkter Parameterwert sein oder ein damit zusammenhängender Wert, beispielsweise ein Ableitungswert.

Die direkte oder indirekte Ermittlung von einem mit dem Vibrationsverhalten des rotierenden Systems zusammenhängenden Parameters ermöglicht es, einen Rückschluss auf den Befüllungsgrad des Feststoffraumes mit aus dem Produkt abgetrennten Feststoff zu ziehen, der sich im Feststoffsammeiraum gesammelt hat. Insbesondere darf der Feststoff nicht den Rand des Tellerstapels erreichen. Wenn daher der ermittelte Parameter oder der damit zusammenhängende Wert einen vorgegebenen - beispielweise im Versuchsbetrieb ermittelten - Grenzwert überschreitet bzw. in vorbestimmter Form von diesem abweicht, wird eine Entleerung ausgelöst, um den Feststoffsammeiraum von Feststoff ganz oder jedenfalls weitestgehend zu entleeren.

Das erfindungsgemäße Verfahren ermöglicht es, auf eine Trübungsmessung zu verzichten, so dass es sich besonders für die Klärung von Produkten eignet, bei welchen eine solche Messung nicht zu zufriedenstellenden Ergebnissen führt. Besonders vorteilhaft ist es, dass als das Ausgangsprodukt ein (z.B. mit einem weiteren Separator) vorgeklärtes Bier verarbeitet wird, dem Hopfen zugesetzt worden ist, der bei der Klärung als die Feststoffe aus dem Bier zu entfernen ist. Denn bei diesem Ausgangsprodukt führt die Trübungsmessung zu besonders unbefriedigenden Ergebnissen, wohingegen kurz vor oder bei Erreichen des für eine Feststoffentleerung geeigneten Zeitpunkt die Vibrationen des rotierenden Systems so erkennbar zunehmen, dass hieraus der für eine Feststoffentleerung geeignete Zeitpunkt bestimmbar ist.

Nach einer vorteilhaften Variante ist der Vibrationssensor an oder nahe zu einem sich drehenden Teil des rotierenden Systems angeordnet, insbesondere an oder nahe zu der Antriebsspindel. In diesem Fall ist es vorteilhaft, wenn mit dem Vibrationssensor ein Auslenkungsverhalten, insbesondere die radiale Auslenkung des sich drehenden Teils, insbesondere der Antriebsspindel, und vorzugsweise die Drehzahl des sich drehenden Teils gemessen wird. Dieses Verfahren - und gerade der Ort an der Antriebsspindel - sind für verschiedenste Messungen (z.B. Biegung und/oder Auslenkung) besonders geeignet, da sie sie hier einfach und besonders präzise durchführbar sind. Alternativ oder optional ist es auch denkbar, dass der Vibrationssensor an oder nahe zu der Trommel angeordnet ist und dass mit ihm das radiale Auslenkungsverhalten der Trommel bestimmt wird.

Alternativ ist es denkbar, wenn der Vibrationssensor an einem sich nicht drehenden Teil, insbesondere an einem Gestell des Separators angeordnet wird. Dann ist es vorteilhaft, wenn mit dem Vibrationssensor eine Summenschwingung - z.B. die Summe der Schwingungen von 10 Hz bis 1000 Hz gemessen wird. Es ist auch denkbar, eine genaue Analyse eines breiten Frequenzbandes mit der Zeit durchzuführen. Dies ist mit bekannten Vibrationsmesssystemen möglich.

Bei einem plötzlichen Anstieg der Messwerte - vorzugsweise ermittelt über eine Bestimmung einer funktionalen Ableitung - wird geeignet, insbesondere unmittelbar nach einem einen Grenzwert übersteigenden Anstieg, eine Entleerung des Feststoffsammelraumes eingeleitet. Die Bestimmung der Ableitung der Messkurve macht die Bestimmung des geeignetes Zeitpunktes für eine Entleerung besonders einfach, da es nicht notwendig ist, je nach Produktparametern einen absoluten Messwert zu bestimmen, bei dem die Entleerung eingeleitet werden soll.

Das Ausgangsprodukt des Verfahrens ist vorgeklärtes Bier, dem Hopfen zugesetzt worden ist, welcher als Feststoff aus dem Bier entfernt wird.

Die einzelnen Verfahrensschritte müssen nicht zwingend in einer Baueinheit des Separators ausgeführt werden, sondern können auch durch externe Geräte (insbesondere Messgeräte, Sensoren, Steuerungseinheit einzeln oder in Kombination dieser und ggf. weiterer Geräte) durchgeführt werden.

Das Vibrationsverhalten kann insbesondere auch anhand einer Auswertung komplexerer Messungen ermittelt werden, bei dem beispielsweise Frequenzspektren ausgewertet werden, wobei z.B. eine Beobachtung eine Frequenzspektrums über die Zeit durchgeführt wird.

Vorteilhafte Ausgestaltungen der Erfindung sind der Gegenstand der Unteransprüche.

Die Erfindung wird nachfolgend anhand eines bevorzugten Ausführungsbeispiels unter Bezugnahme auf die beigefügten Zeichnungen näher erläutert. Es zeigt:
- Fig. 1: eine schematische Schnittansicht eines Separators, welcher mit dem erfindungsgemäßen Verfahren betrieben wird;
- Fig. 2: in a) ein vereinfacht dargestelltes Auslenkungsverhalten eines Separators bei verschiedenen Frequenzen und in b) das Auslenkungsverhalten einer Antriebsspindel auf Trommeldrehzahl in Abhängigkeit von der Zeit bis zum Erreichen des Zeitpunkts einer Entleerung des Feststoffsammelraumes.

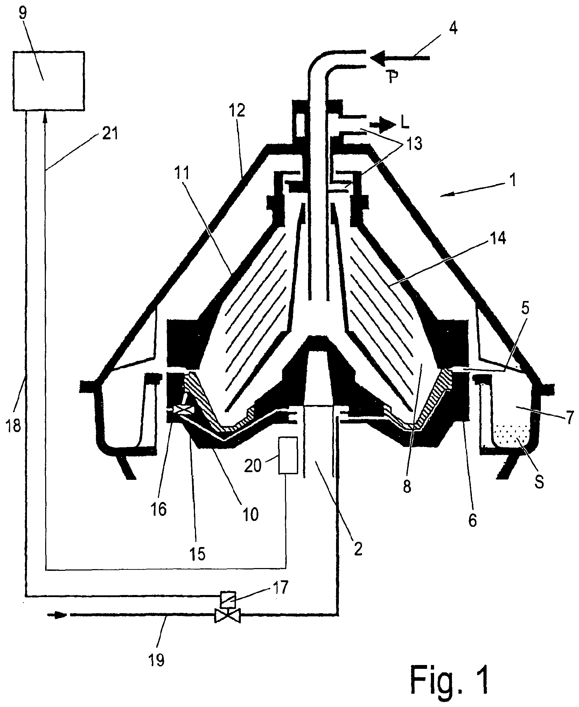

Fig. 1 zeigt einen Separator 1 zum Klären von trübstoffhaltigen, fließfähigen Ausgangsprodukten P mit einer Trommel mit vertikaler Drehachse. Die Verarbeitung des Produktes erfolgt im kontinuierlichen Betrieb. D.h., der Produktzulauf erfolgt kontinuierlich und auch das Ableiten wenigstens einer geklärten Flüssigkeitsphase, Klarphase genannt.

Bei dem trübstoffhaltigen, fließfähigen Ausgangsprodukt P handelt es sich vorzugsweise um ein Bier, insbesondere um ein bereits einmal vorgeklärtes Bier, dem Hopfen zur Würzung zugesetzt worden ist, der nach einer gewissen Zeit des Einwirkens wieder aus dem Bier zu entfernen ist.

Der selbstentleerende Separator verfügt dazu einen diskontinuierlichen Feststoffaustrag, wobei der aus einem Ausgangsprodukt durch Klärung abgetrennte Feststoff F - insbesondere derb Hopfen - in Intervallen durch das Öffnen und Wiederverschließen von Austragsdüsen bzw. Austragsöffnungen 5 entleert wird.

Die Trommel weist ein Trommelunterteil 10 und einen Trommeldeckel 11 auf. Sie ist ferner vorzugsweise von einer Haube 12 umgeben. Die Trommel ist zudem auf eine Antriebsspindel 2 aufgesetzt, die drehbar gelagert und motorisch antreibbar ist.

Die Trommel weist einen Produktzulauf 4 auf, durch welchen das zu klärende Ausgangsprodukt P in die Trommel geleitet wird. Sie weist ferner wenigstens einen Ablauf 13 mit einem Greifer auf, welcher zur Ableitung einer Klarphase L aus der Trommel dient. Der Greifer ist eine Art Zentripetalpumpe. Der Flüssigkeitsaustrag könnte aber auch mit anderen Mitteln erfolgen. Zudem wäre es auch denkbar, neben der Klärung auch eine Trennung des Produktes in zwei Flüssigkeitsphasen verschiedener Dichte vorzunehmen. Hierzu wäre ein weiterer Flüssigkeitsablauf erforderlich.

Die Trommel weist vorzugweise ein Tellerpaket 14 aus axial beabstandeten Trenntellern auf. Zwischen dem Außenumfang des Tellerpakets 14 und dem Innenumfang der Trommel im Bereich ihres größten Innendurchmessers ist ein Feststoffsammelraum 8 ausgebildet. Feststoffe, welche im Bereich des Tellerpakets 14 von der Klarphase getrennt werden, sammeln sich in dem Feststoffsammeiraum 8, aus dem die Feststoffe über die Austragsöffnungen 5 aus der Trommel ausgetragen werden können. Die Austragsöffnungen 5 können mittels eines Kolbenschiebers 6, weicher im Trommelunterteil 11 angeordnet ist, geöffnet und geschlossen werden. Bei geöffneten Austragsöffnungen wird der Feststoff F aus der Trommel in einen Feststofffänger 7 geschleudert.

Zur Bewegung des Kolbenschiebers 6 weist die Trommel einen Betätigungsmechanismus auf. Hier umfasst dieser wenigstens eine Zuleitung 15 für ein Steuerfluid wie Wasser und eine Ventilanordnung 16 in der Trommel und weitere Elemente außerhalb der Trommel. So wird der Zulauf des Steuerfluides wie Wasser über ein außerhalb der Trommel angeordnetes Steuerventil 17 ermöglicht, welches in einer außerhalb der Trommel angeordneten Zulaufleitung 19 für das Steuerfluid angeordnet ist, so dass für eine Entleerung durch Freigabe des Steuerventils das Steuerfluid in die Trommel spritzbar ist oder umgekehrt der Zustrom an Steuerfluid unterbrochen werden kann, um den Kolbenschieber entsprechend zu bewegen, um die Austragsöffnungen freizugeben. Der Betätigungsmechanismus - hier das Steuerventil 17 - ist über eine Datenleitung 18 mit einer Steuerungseinheit 9 zur Steuerung und/oder Regelung des Feststoffaustrags verbunden.

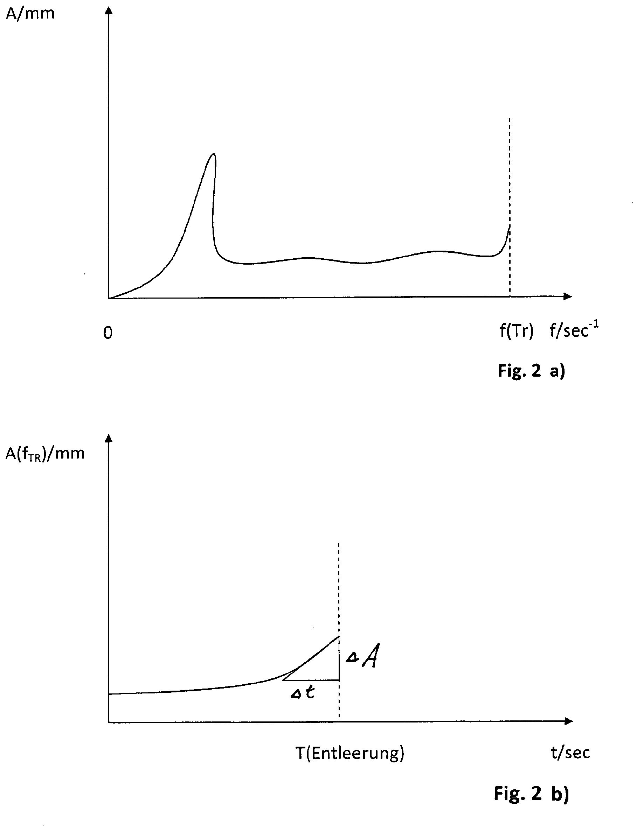

Während der Klärung des Ausgangsproduktes P unter Bildung der Klarphase L werden im Ausgangsprodukt enthaltene Feststoffe - bei der Verarbeitung eines vorgeklärten Bieres insbesondere Hopfen - im Feststoffsammelraum 6 des Separators gesammelt, der sich füllt. Wenn zu viele der Feststoffe in dem Sammelraum 6 angesammelt sind, beginnt deren Austrag mit der Klarphase (Fig. 2), was möglichst zu vermeiden ist.

Zur Bestimmung des geeignetsten Zeitpunkts für eine Feststoffentleerung ist ein Vibrationssensor 20 vorgesehen. Der Vibrationssensor 20 ermöglicht es vorzugsweise, Parameter zum zeitlichen und örtlichen Auslenkungsverhalten des rotierenden Systems zu ermitteln.

Vorzugsweise ist der Vibrationssensor 20 hierzu am oder nahe zu dem rotierenden System angeordnet. In Fig. 1 ist der Vibrationssensor 20 dazu ausgelegt und angeordnet, einen oder mehrere Parameter zur Auslenkung der vertikal ausgerichteten Antriebsspindel 2 zu ermitteln.

Die Messung kann beispielsweise über einen oder mehrere induktiv wirkende(n) Sensor(en) 20 erfolgen, mit dem die Amplitude der radialen Antriebsspindel in Abhängigkeit von der Zeit gemessen wird. Sodann erfolgt mit der Rechnereinheit 9eine Auswertung. Beispielsweise wird dann, wenn die radiale Auslenkung eine bestimmten vorgespeicherten Wert überschreitet, eine Feststoffentleerung ausgelöst.

Diese Lösung basiert auf der Beobachtung, dass das rotierende System in einem Zustand, in welchem sich die Feststoffkammer so viele Feststoffe angesammelt haben, dass an sich eine Entleerung notwendig wäre, zu verstärkter Vibration neigt, so dass das Vibrationsverhalten ein guter Indikator ist, eine Entleerung auszulösen.

Das Messen der radialen Auslenkung der Antriebsspindel eignet sich hierfür in besonderer Weise. Denn an der Antriebsspindel sind präzise Messungen mit einfachem konstruktivem Aufwand möglich.

Ganz besonders bevorzugt wird eine Halslagerbrücke für diese Anordnung eingesetzt. Zudem kann nicht nur der Weg gemessen werden sondern auch die Beschleunigung, um das Vibrationsverhalten zu ermitteln.

Alternativ könnte ein Vibrationssensor auch an einer anderen geeigneten Stelle des rotierenden Systems angeordnet werden, so an einer geeigneten Stelle der Trommel.

Der Vibrationssensor ist über eine drahtgebundene oder drahtlose Datenleitung 21 mit der Auswerte- und Steuerungseinheit 9 (vorzugsweise ein Steuerungsrechner des Separators) verbunden, welche die ermittelten Messwerte auswertet und in Abhängigkeit von dieser Auswertung das Entleeren und damit die Öffnung der Austragsöffnungen 5 steuert.

Nachfolgend wird ein Ausführungsbeispiel eines erfindungsgemäßen Verfahrens, welches mittels des vorbeschriebenen Separators durchgeführt wird, näher erläutert.

In den Separator wird vorzugsweise kontinuierlich das Ausgangsprodukt P (Bier, mit Feststoffen) geleitet, wo dieses geklärt wird. Es erfolgt ein kontinuierlicher Klarphasenaustrag der Klarphase L.

An der Antriebsspindel ist der Vibrationssensor 20 angeordnet, mit dem in einem ersten Schritt a) eine Messung der radialen Auslenkung der Antriebsspindel 2 erfolgt. Sodann wird der gemessene Wert in einem zweiten Schritt b) mit einem vorgegebenen und vorab gespeicherten Grenzwert verglichen. Dieser vorgegebene Grenzwert kann beispielsweise vorab während Messungen im Probebetrieb so bestimmt worden sein, dass er einer 90%igen Füllung des Feststoffsammeiraums mit Feststoff entspricht.

Solange der Grenzwert nicht erreicht ist, werden wiederholt erneut die Schritte a) und b) durchlaufen.

Beim Erreichen oder Überschreiten des Grenzwertes erfolgt dagegen in einem dritten Schritt eine Entleerung des Feststoffsammetraumes durch eine Betätigung des Kolbenschiebers.

Derart lassen sich Feststoffe aus Ausgangsprodukten entfernen, bei welchen eines Trübungsmessung nicht zu zufriedenstellenden Ergebnissen führt, um den für eine Feststoffentleerung geeigneten Zeitpunkt zu bestimmen. Es ist dies die Klärung eines bereits vorgeklärten Bieres, dem nach der Vorklärung Hopfen zur Würzung zugesetzt worden sind, vom Hopfen.

Fig. 2a zeigt vereinfacht ein Schwingungsspektrum einer Separatortrommel bis zur Trommeldrehzahl (bzw. f(Tr)). Der Trommeldrehzahl wird besondere Aufmerksamkeit geschenkt. Üblicherweise verringert sich diese Drehzahl aufgrund von Energieverlust durch ausgeschleuderte Masse bei Entleerungen und sie verändert sich auch kurz vor Entleerungen. Insbesondere verändert sich auch die Amplitude der Auslenkung der Komponenten des sich drehenden Systems kurz bevor der Feststoffsammelraum von Feststoffen vollständig gefüllt ist deutlich. Es ist als vorteilhaft, die Veränderung der Beschleunigung oder Veränderung der Auslenkung der Antriebsspindel über die Zeit zu bestimmen (Δt/ΔA; t := Zeit in sec; A := Amplitude in mm)) und somit die Ableitung der Auslenkung z.B. der Antriebsspindel nach der Zeit zu bestimmen. Das zeitliche Messintervall und das Intervall, für das die Ableitung bestimmt wird, kann beispielsweise 1 sec betragen. Übersteigt diese Ableitung einen Grenzwert, wird bei dem Zeitpunkt T(Entleerung) eine solche Entleerung eingeleitet. Danach sinkt die Amplitude wieder und die Messung der Fig. 2 beginnt von neuem. Fig. 2b veranschaulicht insofern nicht nur das Prinzip eines besonders vorteilhaften Ausführungsbeispiels der Erfindung sondern auch besonders gut, dass der für eine Entleerung geeignete Zeitpunkt vorteilhaft über eine Bestimmung einer Ableitung einer Messwertbestimmung in Abhängigkeit von der Zeit bestimmt wird.

### Bezugszeichenliste:

- 1: Separator
- 2: Antriebsspindel
- 3: Sensor
- 4: Zulauf
- 5: Austragsöffnungen
- 6: Kolbenschieber
- 7: Feststofffänger
- 8: Feststoffsammelraum
- 9: Auswerteeinheit
- 10: Trommelunterteil
- 11: Trommeldeckel
- 12: Haube
- 13: Ablauf
- 14: Tellerpaket
- 15: Leitung für Hydraulikflüssigkeit
- 16: Ventil
- 17: Steuerventil
- 18: Datenleitung
- 19: Hydraulikleitung
- 20: Sensor
- 21: Datenleitung

- P: Ausgangsprodukt
- L: Flüssigkeitsphase/Klarphase
- F: Feststoffe

## Patentansprüche

1. Verfahren, mit dem ein fließfähiges Produkt (P) mit einem diskontinuierlich Feststoff selbstentleerenden Separator geklärt wird, wobei als das Ausgangsprodukt ein vorgeklärtes Bier verarbeitet wird, dem Hopfen zugesetzt worden ist, welche als die Feststoffe aus dem Bier entfernt werden, wobei der Separator ein rotierendes System mit einer von einer Antriebsspindel drehbaren Trommel umfasst, die einen Zulauf für das zu klärende Produkt (P) und wenigstens einem Flüssigkeitsaustrag zum kontinuierlichen Austrag wenigstens einer geklärten Flüssigkeitsphase (L) aufweist und diskontinuierlich zu öffnende Feststoffaustragsöffnungen zum diskontinuierlichen Austrag der Feststoffphase (S), **gekennzeichnet durch** die folgenden Schritte:
a. Bestimmen von einem oder mehreren mit dem Vibrationsverhalten des rotierenden Systems zusammenhängenden Parameter(n) mit Hilfe wenigstens eines Vibrationssensors (20); und
b. Auslösen eines zeitlich begrenzten Feststoffaustrags bei dem oder nach dem Überschreiten eines Grenzwertes für den oder die gemessenen Parameter.

2. Verfahren nach Anspruch 1, **dadurch gekennzeichnet, dass** der Vibrationssensor (20) an oder nahe zu einem sich drehenden Teil des rotierenden Systems angeordnet wird.

3. Verfahren nach Anspruch 2, **dadurch gekennzeichnet, dass** der Vibrationssensor (20) an oder nahe zu der Antriebsspindel (22) angeordnet wird.

4. Verfahren nach Anspruch 2 oder 3, **dadurch gekennzeichnet, dass** mit dem Vibrationssensor (20) ein Auslenkungsverhalten, insbesondere die radiale Auslenkung des sich drehenden Teils, insbesondere der Antriebsspindel, über die Zeit und vorzugsweise die Drehzahl des sich drehenden Teils gemessen und bestimmt wird.

5. Verfahren nach Anspruch 1, **dadurch gekennzeichnet, dass** der Vibrationssensor (20) an sich nicht drehenden Teil, insbesondere an einem Gestell des Separators angeordnet wird.

6. Verfahren nach Anspruch 5, **dadurch gekennzeichnet, dass** mit dem Vibrationssensor (20) wiederholt eine Summenschwingung bestimmt wird.

7. Verfahren nach einem der vorstehenden Ansprüche, **dadurch gekennzeichnet, dass** das Überschreiten des Grenzwertes über eine Bestimmung einer Ableitung einer Messwertbestimmung in Abhängigkeit von der Zeit bestimmt wird.

## Claims

1. A method for clarifying a free-flowing product (P) with a separator that discontinuously automatically empties solid matter, wherein as the starting product a pre-clarified beer is processed to which hops have been added, which are removed from the beer as the solid matter, wherein the separator comprises a rotating system having a drum which can be rotated by a drive spindle and has an inlet for the product (P) to be clarified and at least one liquid discharge for the continuous discharge of at least one clarified liquid phase (L) and solid-matter discharge openings that are to be opened discontinuously for the discontinuous discharge of the solid-matter phase (S), **characterized by** the following steps:
a. determining one or more parameter(s) associated with the vibration behavior of the rotary system with the aid of at least one vibration sensor (20); and
b. initiating a time-limited solid-matter discharge when or after a limiting value for the measured parameter(s) is exceeded.

2. The method as claimed in claim 1, **characterized in that** the vibration sensor (20) is arranged on or close to a rotating part of the rotary system.

3. The method as claimed in claim 2, **characterized in that** the vibration sensor (20) is arranged on or close to the drive spindle (22).

4. The method as claimed in claim 2 or 3, **characterized in that** a deflection behavior, in particular the radial deflection of the rotating part, in particular of the drive spindle, over time, and preferably, the rotational speed of the rotating part, is measured and determined with the vibration sensor (20).

5. The method as claimed in claim 1, **characterized in that** the vibration sensor (20) is arranged on a non-rotating part, in particular on a frame of the separator.

6. The method as claimed in claim 5, **characterized in that** an overall vibration is repeatedly determined with the vibration sensor (20).

7. The method as claimed in one of the preceding claims, **characterized in that** the fact that the limiting value has been exceeded is determined via a determination of a derivative of a measured value determination as a function of time.

## Revendications

1. Procédé pour clarifier un produit fluide (P) avec un séparateur à évacuation automatique discontinue des solides, dans lequel le produit de départ à traiter est une bière préalablement clarifiée à laquelle a été ajouté du houblon qui constitue les solides à retirer de la bière, dans lequel le séparateur est un système rotatif avec un tambour entraîné par une broche d'entraînement, qui présente une arrivée pour le produit à clarifier (P) et au moins une sortie de liquide pour la sortie en continu d'au moins une phase liquide clarifiée (L) et des ouvertures d'évacuation de solides à ouverture discontinue pour la sortie discontinue de la phase solide (S), **caractérisé en ce qu'**il comprend les étapes suivantes :
a. détermination d'un ou plusieurs paramètres liés au comportement vibratoire du système rotatif à l'aide d'au moins un capteur de vibrations (20) et
b. déclenchement d'une sortie de solides de durée limitée quand ou après qu'une valeur limite du ou des paramètres mesurés est dépassée.

2. Procédé selon la revendication 1, **caractérisé en ce que** le capteur de vibrations (20) est disposé sur ou près d'une partie en rotation du système rotatif.

3. Procédé selon la revendication 2, **caractérisé en ce que** le capteur de vibrations (20) est disposé sur ou à proximité de la broche d'entraînement (22).

4. Procédé selon la revendication 2 ou 3, **caractérisé en ce que** le capteur de vibrations (20) permet de mesurer et de déterminer un comportement de déviation, en particulier la déviation radiale de la partie en rotation, en particulier de la broche d'entraînement, dans le temps, et de préférence la vitesse de rotation de la partie en rotation.

5. Procédé selon la revendication 1, **caractérisé en ce que** le capteur de vibrations (20) est disposé sur une partie qui ne tourne pas, en particulier sur un bâti du séparateur.

6. Procédé selon la revendication 5, **caractérisé en ce que** le capteur de vibrations (20) détermine de façon répété une somme de vibrations.

7. Procédé selon l'une des revendications précédentes, **caractérisé en ce que** le dépassement de la valeur limite est déterminé par la détermination d'une dérivation d'une valeur mesurée en fonction du temps.
